# EUROPÄISCHE PATENTSCHRIFT

(11) **EP 1 217 003 B1**
(45) Veröffentlichungstag und Bekanntmachung des Hinweises auf die Patenterteilung: **01.02.2006**
(21) Anmeldenummer: 01130045.6
(22) Anmeldetag: 18.12.2001
(51) Int. Cl.: C07F 9/30

(54) **Verfahren zur Herstellung von Ethanbis(methylphosphinsäure)**
Process for the preparation of ethylenebis(methylphosphinic) acid
Procédé pour la préparation d'acide ethane bis(méthylphosphinique)

(30) Priorität: 23.12.2000 DE 10065054
(43) Veröffentlichungstag der Anmeldung: 26.06.2002
(73) Patentinhaber: Clariant GmbH, 65929 Frankfurt am Main (DE)
(72) Erfinder: Sicken, Martin, Dr., 51149 Köln (DE); Schmitz, Hans-Peter, 50321 Brühl (DE)
(74) Vertreter: Clariant Service GmbH

(56) Entgegenhaltungen:
- DE-A- 2 302 523
- NIFANT'EV E E ET AL: "Reactions of acetylenes with hypophosphorous and phosphonous acids" JOURNAL OF GENERAL CHEMISTRY USSR, CONSULTANTS BUREAU. NEW YORK, US, Bd. 56, Nr. 4, 20. September 1986 (1986-09-20), Seiten 680-688, XP002165520

## Beschreibung

Die vorliegende Erfindung betrifft ein Verfahren zur Herstellung von Ethanbis(methyl-phosphinsäure) aus Methylphosphoniger Säure.

Phosphinsäuren und deren Salze sind nach verschiedenen Methoden herstellbar und in großem Umfang in der Literatur beschrieben.

Organische Phosphinsäuren, deren Salze und Ester sind als Flammschutzmittel bekannt. So beschreibt die EP 0 699 708 A1 flammgeschützte Polyesterformmassen, wobei die Polyesterformmassen durch den Zusatz von Calcium- oder Aluminiumsalzen von Phosphin- oder Diphosphinsäuren flammfest ausgerüstet werden. Die vorgenannten Salze werden durch Umsetzung der entsprechenden Phosphinsäuren mit Calcium- oder Aluminiumhydroxid erhalten.

Aufgrund ihres hohen Phosphorgehaltes und vor allem wegen ihrer Zweizähnigkeit werden die Diphosphinsäuren als sehr effektive reaktive Flammschutzmittel für Polyester, z.B. für Textil-Anwendungen, beschrieben. Dies gilt besonders für die Ethanbis(methylphosphinsäure), speziell in Form ihres Glykolesters (DE 22 36 037 A1).

Die Herstellung der Ethanbis(methylphosphinsäure) ist technisch sehr aufwendig und erfolgt beispielsweise durch eine Arbuzov-Reaktion von Methylphosphonigsäurediisopropylester mit Ethylenbromid [P. Mastalerz, Rocziniki Chem 38 (1964), S. 61-64] und anschließende Esterspaltung. Der eingesetzte Phosphonigsäurediester wird aus Methylphosphonigsäuredichlorid durch Umsetzung mit Alkoholen hergestellt.

Nifant'ev et al, (Journal of General Chemistry USSR, Consultants Bureau. New York, Bd. 56, Nr. 4 vom 20.09.1988, Seiten 680-688) beschreiben allgemein die Reaktion von Acetylenen mit hypophosphorigen und phosphonigen Säuren. Dabei werden u.a. auch Ethin und 1-Hexin eingesetzt.

Nachteilig bei dem von Nifant'ev et al. beschrieben Verfahren ist jedoch der Einsatz von Dioxan als Lösungsmittel, welches wegen seiner Toxizität in höchstem Maße unerwünscht ist.

Als weitere Möglichkeit zur Herstellung von Ethan-Diphosphinsäuren wird in der DE 23 02 523 A1 die Umsetzung von Alkylphosphonigsäureestern mit Ethin (Acetylen) und die anschließende Spaltung des Diesters mit HCl unter Bildung von Alkylchloriden vorgeschlagen. Auch die hier eingesetzten Alkylphosphonigsäureester werden aus den entsprechenden Phosphonigsäuredihalogeniden durch Hydrolyse und Umsetzung mit Alkoholen hergestellt.

Die vorgenannten Verfahren weisen den Nachteil auf, dass sie als letzten Schritt die technisch schwierige Spaltung der entsprechenden Ester vorsehen und somit nur sehr aufwendig durchzuführen sind.

Es werden zudem Nebenprodukte gebildet, die, wie zum Teil auch die vorgenannten Ausgangsprodukte, giftig, selbstentzündlich und/oder korrosiv, also höchst unerwünscht sind.

Der Erfindung liegt daher die Aufgabe zugrunde, ein Verfahren zur Herstellung von Ethanbis(methylphosphinsäure) zur Verfügung zu stellen, welches auf besonders einfache und wirtschaftliche Art und Weise durchführbar ist und bei dem ein einheitliches Produkt in hoher Ausbeute erhalten wird und das insbesondere auf die aufwendige Diphosphinsäureester-Spaltung verzichtet. Auch sollte ein solches Verfahren den bisher bekannten umwelttechnisch deutlich überlegen sein.

Diese Aufgabe wird gelöst durch ein Verfahren zur Herstellung von Ethanbis(metylphosphinsäure), dadurch gekennzeichnet, dass man Ethin (Acetylen) mit Methylphosphoniger Säure in Gegenwart eines Radikalstarters im Lösungsmittel Essigäure umsetzt:

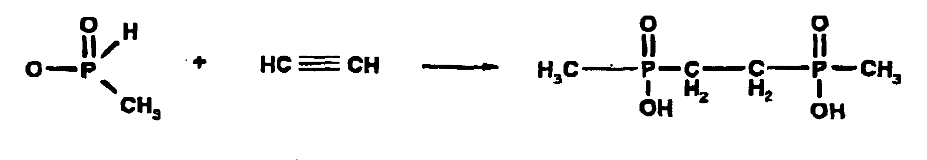

Das erfindungsgemäße Verfahren weist gegenüber den bisher bekannten Verfahren erhebliche Vorteile auf, da es keine halogenierten organischen Nebenprodukte erzeugt, keine aufwendigen Ester-Spaltung von Phosphinsäuren beinhaltet und auch in der Produktverteilung eine positive Bilanz aufweist. Das Verfahren ist sehr effektiv und wirtschaftlich durchzuführen.

Methylphosphonige Säure wird auf einfache und bekannte Weise durch Hydrolyse von Methylphosphonigsäuredichlorid hergestellt.

Bevorzugt werden als Radikalstarter Azoverbindungen eingesetzt.

Bevorzugt handelt es sich bei den Azoverbindungen um kationische und/oder nicht-kationische Azoverbindungen.

Bevorzugt werden als kationische Azoverbindungen 2,2'-Azobis(2-amidinopropan)-dihydrochlorid oder 2,2'-Azobis(N,N'-dimethylenisobutyramidin)dihydrochlorid eingesetzt.

Bevorzugt werden als nicht-kationische Azoverbindungen Azobis(isobutyronitril), 4,4'Azobis(4-cyano-pentansäure), 2,2'Azobis(2-methylbutyronitril) eingesetzt.

Bevorzugt werden als Radikalstarter peroxidische anorganische und/oder peroxidische organische Radikalstarter eingesetzt.

Bevorzugt werden als peroxidische anorganische Radikalstarter Wasserstoffperoxid, Ammoniumperoxodisulfat und/oder Kaliumoperoxodisulfat eingesetzt.

Bevorzugt werden als peroxidische organische Radikalstarter Dibenzoylperoxid, Di-tert.-butylperoxid und/oder Peressigsäure eingesetzt.

Eine breite Auswahl geeigneter Radikalstarter findet sich beispielsweise in Houben-Weyl, Ergänzungsband 20, im Kapitel "Polymerisation durch radikalische Initiierung" auf den Seiten 15-74.

Bevorzugt werden die Radikalstarter während der Reaktion kontinuierlich zudosiert.

Bevorzugt werden die Radikalstarter während der Reaktion in Form einer Lösung im Ethin (Acetylen) kontinuierlich zudosiert.

Bevorzugt werden die Radikalstarter während der Reaktion in Form einer Lösung im verwendeten Lösungsmittel kontinuierlich zudosiert.

Bevorzugt erfolgt die Umsetzung bei einer Temperatur von 40 bis 200°C.

Besonders bevorzugt erfolgt die Umsetzung bei einer Temperatur von 70 bis 130°C.

Bevorzugt erfolgt die Umsetzung durch Einleiten von gasförmigem Ethin (Acetylen) unter Normaldruck.

Bevorzugt erfolgt die Umsetzung unter Druck.

Bevorzugt wird das Verfahren so geführt, dass nach einem Teilumsatz die ausfallende Ethan-bis(methylphosphinsäure) abfiltriert wird und nach Aufstocken der verbrauchten Methylphosphonigen Säure weiter Acetylen addiert wird.

Der Gegenstand der vorliegenden Erfindung umfasst auch ein Verfahren, bei dem man reine Methylphosphonige Säure mit Ethin (Acetylen) in Gegenwart eines kationischen oder nicht-kationischen Radikalstarters oder in Gegenwart eines peroxidischen Radikalstarters zur Ethan-bis(methylphosphinsäure) umsetzt.

Der Gegenstand der vorliegenden Erfindung umfasst insbesondere auch ein Verfahren, bei dem man Methylphosphonige Säure mit Ethin (Acetylen) in Gegenwart eines kationischen oder nicht-kationischen Radikalstarters oder in Gegenwart eines peroxidischen Radikalstarters in Essigsäure zur Ethan-bis(methylphosphinsäure) umsetzt und diese kontinuierlich aus dem Reaktionsgemisch durch Umlauf-Filtration entfernt und ebenso kontinuierlich die verbrauchte Methylphosphonige Säure durch neue ersetzt.

Die gewünschten Ethan-bis(methylphosphinsäure) wird mit hoher Selektivität in hoher Reinheit erhalten.

Sowohl die Methylphosphonige Säure als auch das Ethin (Acetylen) können jeweils im Überschuss eingesetzt werden, da die Reaktionspartner immer im Molverhältnis 2 zu 1 (Methylphosphonige Säure zu Ethin (Acetylen)) reagieren.

Die nach dem erfindungsgemäßen Verfahren hergestellte Ethan-bis(methylphosphinsäure) finden Verwendung als Ausgangsprodukt zur Herstellung von Flammschutzmitteln für Polymere, z.B. für thermoplastische Polymere wie Polyethylenterephthalat, Polybutylenterephthalat oder Polyamid; oder für duroplastische Harze wie ungesättigte Polyesterharze, Epoxidharze, Polyurethane oder Acrylate.

Die nach dem erfindungsgemäßen Verfahren hergestellte Ethan-bis(methylphosphinsäure) lassen sich auch verwenden als Vorprodukte zur chemischen Synthese von anderen, phosphorhaltigen Verbindungen.

Die Erfindung wird durch nachstehende Beispiele erläutert:

### Beispiel 1: Ethanbis(methylphosphinsäure)

In einem 1l-5-Hals-Kolben, ausgestattet mit Gaseinleitungs-Fritte, Thermometer, Rührer, Rückflusskühler und Initiatordosierung wird eine Lösung von 93 g Methylphosphoniger Säure in 200 g Eisessig gelöst und auf ca. 90°C erhitzt. Unter kräftigem Rühren wird über einen Zeitraum von 5 h eine Lösung von 14 g (5 Mol-%) Ammoniumperoxodisulfat in 30 g Wasser zudosiert. Gleichzeitig wird über die Gaseinleitungsfritte ca. 10 l/h Ethin (Acetylen) durch die Lösung geleitet, wobei überschüssiges Acetylen über eine Verbrennung geführt wird. Die Reaktionstemperatur wird dabei bei ca. 95-105°C gehalten Nach Entfernen des Acetylens mittels Durchleiten von Stickstoff lässt man abkühlen, wobei Ethan-bis(methylphosphinsäure) ausfällt. Diese wird abfiltriert, zweimal mit je 50 ml Essigsäure gewaschen und bei 100°C im Wasserstrahlvakuum getrocknet. Man erhält so ca. 78 g (70 % d.Th., bezogen auf die eingesetzte Methylphosphonige Säure) Ethan-bis(methylphosphinsäure) in Form farbloser Kristalle mit einem Schmelzpunkt von 197°C. Die Mutterlauge enthält weiteres Endprodukt (Ethan-bis(methylphosphinsäure)) und kann für weitere Umsetzungen genutzt werden. Elementaranalyse: P: ber. 33, %/gef. 33;
³¹P-NMR-Spektrum (D₂O): δ = 55 ppm (Singulett); Reinheit (³¹P-NMR): 99 %.

### Beispiel 2: Ethanbis(methylphosphinsäure)

In einem 1l-5-Hals-Kolben, ausgestattet mit Gaseinleitungs-Fritte, Thermometer, Rührer Rückflusskühler und Initiatordosierung wird eine Lösung von 160 g Methylphosphoniger Säure in 200 g Eisessig gelöst und auf ca. 90°C erhitzt. Unter kräftigem Rühren wird über einen Zeitraum von 6 h eine Lösung von 19 g (5 Mol-%) 2,2'Azobis(2-methylbutyronitril) in 100 g Eisessig zudosiert. Gleichzeitig wird über die Gaseinleitungsfritte ca. 15 l/h Ethin (Acetylen) durch die Lösung geleitet, wobei überschüssiges Acetylen über eine Verbrennung geführt wird. Die Reaktionstemperatur wird dabei bei ca. 95-105°C gehalten. Nach Entfernen des Acetylens mittels Durchleiten von Stickstoff und lässt man abkühlen, wobei Ethan-bis(methylphos-phinsäure) ausfällt. Diese wird abfiltriert, zweimal mit je 50 ml Essigsäure gewaschen und bei 100°C im Wasserstrahlvakuum getrocknet. Man erhält so ca. 136 g (73 % d.h., bezogen auf die eingesetzte Methylphosphonige Säure) Ethan-bis(methylphosphinsäure) in Form farbloser Kristalle mit einem Schmelzpunkt von 199°C und einer Reinheit (³¹P-NMR) von 99 %. Die Mutterlauge enthält weiteres Endprodukt (Ethan-bis(methylphosphinsäure)) und kann für weitere Umsetzungen genutzt werden.

## Patentansprüche

1. Verfahren zur Herstellung von Ethanbis(methylphosphinsäure), **dadurch gekennzeichnet, dass** man Ethin (Acetylen) mit Methylphosphoniger Säure in Gegenwart eines Radikalstarters im Lösungsmittel Essigsäure umsetzt.

2. Verfahren nach Anspruch 1, **dadurch gekennzeichnet, dass** als Radikalstarter Azoverbindungen eingesetzt werden.

3. Verfahren nach Anspruch 1 oder 2, **dadurch gekennzeichnet, dass** es sich bei den Azoverbindungen um kationische und/oder nicht-kationische Azoverbindungen handelt.

4. Verfahren nach einem oder mehreren der Ansprüche 1 bis 3, **dadurch gekennzeichnet, dass** als kationische Azoverbindungen 2,2'-Azobis(2-amidinopropan)-dihydrochlorid oder 2,2'-Azobis(N,N'-dimethylenisobutyramidin)-dihydrochlorid und als nicht-kationische Azoverbindungen Azobis(isobutyronitril), 4,4'Azobis(4-cyano-pentansäure) und/oder 2,2'Azobis(2-methylbutyronitril) eingesetzt werden.

5. Verfahren nach einem oder mehreren der Ansprüche 1 bis 4, **dadurch gekennzeichnet, dass** als Radikalstarter peroxidische anorganische und/oder peroxidische organische Radikalstarter eingesetzt werden.

6. Verfahren nach Anspruch 5, **dadurch gekennzeichnet, dass** als peroxidische anorganische Radikalstarter Wasserstoffperoxid, Ammoniumperoxodisulfat und/oder Kaliumoperoxodisulfat und als peroxidische organische Radikalstarter Dibenzoylperoxid, Di-tert.-butyl-peroxid und/oder Peressigsäure eingesetzt werden.

7. Verfahren nach einem oder mehreren der Ansprüche 1 bis 6, **dadurch gekennzeichnet, dass** die Radikalstarter während der Reaktion kontinuierlich zudosiert werden.

8. Verfahren nach einem oder mehreren der Ansprüche 1 bis 7, **dadurch gekennzeichnet, dass** die Radikalstarter während der Reaktion in Form einer Lösung im Ethin (Acetylen) kontinuierlich zudosiert werden.

9. Verfahren nach einem oder mehreren der Ansprüche 1 bis 8, **dadurch gekennzeichnet, dass** die Radikalstarter während der Reaktion in Form einer Lösung im verwendeten Lösungsmittel kontinuierlich zudosiert werden.

10. Verfahren nach einem oder mehreren der Ansprüche 1 bis 9, **dadurch gekennzeichnet, dass** die Umsetzung bei einer Temperatur von 40 bis 200°C, bevorzugt von 70 bis 130°C, erfolgt.

11. Verfahren nach einem oder mehreren der Ansprüche 1 bis 10, **dadurch gekennzeichnet, dass** die Umsetzung durch Einleiten von gasförmigem Ethin (Acetylen) unter Normaldruck erfolgt.

12. Verfahren nach einem oder mehreren der Ansprüche 1 bis 11, **dadurch gekennzeichnet, dass** die Umsetzung unter Druck erfolgt.

13. Verfahren nach einem oder mehreren der Ansprüche 1 bis 12, **dadurch gekennzeichnet, dass** man Methylphosphonige Säure mit Ethin (Acetylen) in Gegenwart eines kationischen oder nicht-kationischen Radikalstarters oder in Gegenwart eines peroxidischen Radikalstarters zur Ethanbis(methylphosphinsäure) umsetzt.

14. Verfahren nach einem oder mehreren der Ansprüche 1 bis 13, **dadurch gekennzeichnet, dass** man Methylphosphonige Säure mit Ethin (Acetylen) in Gegenwart eines kationischen oder nicht-kationischen Radikalstarters oder in Gegenwart eines peroxidischen Radikalstarters in Essigsäure zur Ethanbis(methylalkylphos-phinsäure) umsetzt und diese kontinuierlich aus dem Reaktionsgemisch durch Umlauf-Filtration entfernt und ebenso kontinuierlich die verbrauchte Methylphosphonige Säure durch neue ersetzt.

## Claims

1. A process for preparing ethanebis (methylphosphinic) acid, which comprises reacting ethyne (acetylene) with methylphosphonous acid in the presence of a free-radical initiator in the solvent acetic acid.

2. The process as claimed in claim 1, wherein the free-radical initiators used comprise azo compounds.

3. The process as claimed in claim 1 or 2, wherein the azo compounds are cationic and/or non-cationic azo compounds.

4. The process as claimed in one or more of claims 1 to 3, wherein the cationic azo compounds used comprise 2,2'-azobis(2-amidinopropane) dihydrochloride or 2,2'-azobis(N,N'-dimethyleneisobutyramidine) dihydrochloride, and the non-cationic azo compounds used comprise azobis (isobutyronitrile), 4,4'-azobis(4-cyanopentanoic acid) and/or 2,2'-azobis(2-methylbutyronitrile).

5. The process as claimed in one or more of claims 1 to 4, wherein the free-radical initiators used comprise peroxidic inorganic and/or peroxidic organic free-radical initiators.

6. The process as claimed in claim 5, wherein the peroxidic inorganic free-radical initiators used comprise hydrogen peroxide, ammonium peroxodisulfate, and/or potassium peroxodisulfate, and the peroxidic organic free-radical initiators used comprise dibenzoyl peroxide, di-tert-butyl peroxide, and/or peracetic acid.

7. The process as claimed in one or more of claims 1 to 6, wherein the free-radical initiators are metered in continuously during the reaction.

8. The process as claimed in one or more of claims 1 to 7, wherein the free-radical initiators metered in continuously during the reaction are in the form of a solution in the ethyne (acetylene).

9. The process as claimed in one or more of claims 1 to 8, wherein the free-radical initiators metered in continuously during the reaction are in the form of a solution in the solvent used.

10. The process as claimed in one or more of claims 1 to 9, wherein the reaction takes place at a temperature of from 40 to 200°C, preferably from 70 to 130°C.

11. The process as claimed in one or more of claims 1 to 10, wherein the reaction takes place by introducing gaseous ethyne (acetylene) at atmospheric pressure.

12. The process as claimed in one or more of claims 1 to 11, wherein the reaction takes place at superatmospheric pressure.

13. The process as claimed in one or more of claims 1 to 12, wherein methylphosphonous acid is reacted with ethyne (acetylene) in the presence of a cationic or non-cationic free-radical initiator or in the presence of a peroxidic free-radical initiator, to give ethanebis(methylphosphinic) acid.

14. The process as claimed in one or more of claims 1 to 13, wherein methylphosphonous acid is reacted with ethyne (acetylene) in the presence of a cationic or non-cationic free-radical initiator or in the presence of a peroxidic free-radical initiator in acetic acid, to give ethanebis(methylalkylphosphinic) acid, and this is continuously removed from the reaction mixture by a circulating filter system, and the methylphosphonous acid consumed is likewise continuously replaced by fresh acid.

## Revendications

1. Procédé de préparation d'acide éthanebis(méthylphosphinique), **caractérisé en ce qu'**on fait réagir de l'éthyne (acétylène) avec de l'acide méthylphosphoneux en présence d'un amorceur radicalaire dans le solvant acide acétique.

2. Procédé selon la revendication 1, **caractérisé en ce qu'**on utilise en tant qu'amorceur radicalaire des composés azoïques.

3. Procédé selon la revendication 1 ou 2, **caractérisé en ce que**, pour ce qui concerne les composés azoïques, il s'agit de composés azoïques cationiques et/ou non ioniques.

4. Procédé selon l'une ou plusieurs des revendications 1 à 3, **caractérisé en ce qu'**on utilise en tant que composés azoïques cationiques le dichlorhydrate de 2,2'-azobis(2-amidinopropane) ou le dichlorhydrate de 2,2'-azobis(N,N'-diméthylèneisobutyramidine) et en tant que composés azoïques non cationiques l'azobis (isobutyronitrile), l'acide 4,4'-azobis(4-cyano-pentanoïque) et/ou le 2,2'-azobis(2-méthylbutyronitrile).

5. Procédé selon l'une ou plusieurs des revendications 1 à 4, **caractérisé en ce qu'**on utilise en tant qu'amorceur radicalaire des amorceurs radicalaires inorganiques de type peroxyde et/ou des amorceurs radicalaires organiques de type peroxyde.

6. Procédé selon la revendication 5, **caractérisé en ce qu'**on utilise en tant qu'amorceurs de radicaux inorganiques de type peroxyde le peroxyde d'hydrogène, le peroxodisulfate d'ammonium et/ou le peroxodisulfate de potassium, et en tant qu'amorceurs radicalaires organiques de type peroxyde le peroxyde de dibenzoyle, le peroxyde de di-tert-butyle et/ou l'acide peracétique.

7. Procédé selon l'une ou plusieurs des revendications 1 à 6, **caractérisé en ce que** les amorceurs radicalaires sont dosés en continu pendant la réaction.

8. Procédé selon l'une ou plusieurs des revendications 1 à 7, **caractérisé en ce que** les amorceurs radicalaires sont dosés en continu pendant la réaction sous forme d'une solution dans l'éthyne (acétylène).

9. Procédé selon l'une ou plusieurs des revendications 1 à 8, **caractérisé en ce que** les amorceurs radicalaires sont dosés en continu pendant la réaction sous forme d'une solution dans le solvant utilisé.

10. Procédé selon l'une ou plusieurs des revendications 1 à 9, **caractérisé en ce que** la réaction est mise en oeuvre à une température de 40 à 200°C, de préférence de 70 à 130°C.

11. Procédé selon l'une ou plusieurs des revendications 1 à 10, **caractérisé en ce que** la réaction est mise en oeuvre par introduction d'éthyne (acétylène) gazeux sous la pression normale.

12. Procédé selon l'une ou plusieurs des revendications 1 à 11, **caractérisé en ce que** la réaction est mise en oeuvre sous pression.

13. Procédé selon l'une ou plusieurs des revendications 1 à 12, **caractérisé en ce qu'**on fait réagir de l'acide méthylphosphoneux avec de l'éthyne (acétylène) en présence d'un amorceur radicalaire cationique ou non ionique ou en présence d'un amorceur radicalaire de type peroxyde, pour obtenir l'acide éthanebis (méthylphosphinique).

14. Procédé selon l'une ou plusieurs des revendications 1 à 13, **caractérisé en ce qu'**on fait réagir de l'acide méthylphosphoneux avec de l'éthyne (acétylène) en présence d'un amorceur radicalaire cationique ou non ionique ou en présence d'un amorceur radicalaire de type peroxyde dans de l'acide acétique pour obtenir un acide éthanebis(méthyl-alkylphosphinique), et on élimine en continu ce dernier du mélange réactionnel par filtration par circulation, et, toujours en continu, on remplace l'acide méthylphosphoneux consommé par de l'acide méthylphosphoneux neuf.
